Europäisches Patentamt

European Patent Office

Office européen des brevets

(11) Publication number: **0 100 603
B1**

# (12) EUROPEAN PATENT SPECIFICATION

(45) Date of publication of patent specification: **16.12.87**

(51) Int. Cl.⁴: **B 29 C 45/36**

(21) Application number: **83303843.3**

(22) Date of filing: **01.07.83**

(54) Stabilised core injection molding.

(30) Priority: **29.07.82 GB 8221909**

(43) Date of publication of application:
**15.02.84 Bulletin 84/07**

(45) Publication of the grant of the patent:
**16.12.87 Bulletin 87/51**

(84) Designated Contracting States:
**AT BE CH DE FR GB IT LI NL SE**

(56) References cited:
**EP-A-0 008 518
EP-A-0 057 547
FR-A- 962 726
US-A-3 737 272
US-A-3 829 548
US-A-4 125 246
US-A-4 289 468
US-A-4 289 473**

(73) Proprietor: **SORENSEN, Jens Ole
P.O. Box 2274
Rancho Santa Fe, CA 92067 (US)**

(72) Inventor: **SORENSEN, Jens Ole
P.O. Box 2274
Rancho Santa Fe, CA 92067 (US)**

(74) Representative: **Wilson, Nicholas Martin et al
WITHERS & ROGERS 4 Dyer's Buildings Holborn
London EC1N 2JT (GB)**

Courier Press, Leamington Spa, England.

## Description

### Field of the Invention

This invention relates to injection molding of plastics material and specifically to the manufacture of hollow products utilizing a core in the mold.

### Discussion of Prior Art

Heretofore there have been proposals of methods of stabilizing the core of a mold for injection molding. However, these proposals have tended to be inexact and only partly compensate for core deflection, the degree of compensation achieved being very slight and unsatisfactory. One such proposal is disclosed in European Patent publication EP—A—8518 where the molding of plastics material to form battery boxes is disclosed. In that specification baffles are provided to hinder the initial flow of plastics material so that the cooling cavity around the free end of the core is filled first before the rest of the cavity. In this way the plastics material against the baffle will tend to reduce deflection of the core as the plastics material contrives to flow into the rest of the cooling cavity.

At present the main exception to the inadequacies of the prior art is an exact method where the core is held by pins or other such means in physical metal to metal contact with the cavity part of the cooling cavity by hydraulic means, which are removed at the last moment of injection.

One such method is described in Australian patent specification 17,577/70 of Louis Ryles, which discloses a mold having an axially movable core pin with a grooved abutment surface. In use the core pin is urged heavily against the injection gate to hold it firmly in the desired position and then plastics material is injected into the cooling cavity through the grooves in the abutment surface. Only once the whole of the cavity has been filled is the core pin moved axially to allow the end of the product to be molded. The problems with such a method are three-fold, firstly, because the core pin is rigidly held by abutment with the cavity part of the mold, only products having a curved end can be molded. Secondly the hard metal to metal contact to ensure rigidity of the core pin takes the polish off the cooling cavity, which is unacceptable for products such as test tubes and, thirdly the large forces needed to stabilize the core necessitates a very large hydraulic cylinder and piston assembly, for which there is normally not enough room in the mold.

Another prior arrangement is disclosed in US—A—3737272, to which the preamble of claims 1 and 9 is related, and where a method of manufacturing thin walled cups or containers from plastics material is disclosed. In that arrangement however transverse locking means are also provided which positively interlock with the mold portions such that the disadvantages apparent from the aforementioned Australian Patent are also present.

The present invention is not dependent upon the shape of the end of the molded product, is not dependent on metal to metal contact in the cooling cavity, and is not dependent upon large hydraulic cylinders.

### Summary of the Present Invention

Therefore, according to the present invention there is provided a method for controlling the dimensions of a hollow plastics product injection molded within the cooling cavity of a mold having a core part and a cavity part defining the cooling cavity therebetween, the cooling cavity comprising a retractable element, and injection gate means opening into the cooling cavity comprising stabilising the core part and the steps of injecting first plastics material through said injection gate means into the cooling cavity while the retractable element is in its unretracted position and of injecting second plastics material while the retractable element is in its retracted position; characterized by the steps of:

(a) injecting the first plastics material so that a portion of the cooling cavity apart from the retraction region of the retractable element is not filled;

(b) using the first plastics material to stabilise the core part by impeding movement of the core part;

(c) retracting the retractable element of the cooling cavity to provide a flow path for the second plastics material between the injection gate means and said unfilled portion of the cooling cavity; and

(d) injecting second plastics material through the injection gate means to said unfilled portion of the cooling cavity by passage through said flow path; and

(e) fusing the plastics materials with the harder previously injected first plastics material to form a solidified hollow molded plastic.

The invention also includes a method of cyclic injection molding of hollow plastic products employing a mold comprising a core part and a cavity part, wherein the dimensions of the molded product are controlled, each production cycle comprises the steps of:

(a) injecting a hot molten first quantity of plastics through a gate into a first region of a cooling cavity,

(b) retracting a retractable element of the cooling cavity, whereby a retraction region is created in the cooling cavity thereby providing the cooling cavity in a retracted mode,

(c) injecting subsequent to injecting the first quantity of plastics, a hot molten second quantity of plastics through the gate, filling up the retraction region of the cooling cavity,

(d) cooling by cooling means the injected first and second quantity of plastics to thereby soldify the first and second quantity of plastics,

(e) ejecting by ejector means the solidified hollow molded product, and

(f) protracting the retractable element of the cooling cavity thereby providing the cooling cavity in an unretracted mode,

characterised by:

Step (a) comprising the step of:

(g) injecting the quantity of the first plastics into the first region of the cooling cavity which is in its unretracted mode, in such a manner that the cooling cavity comprises a second region apart from the retraction region which is not filled up,

Step (b) comprising the step of:

(h) creating one or more retraction passages which connect the gate to said second region of the cooling cavity,

Step (c) comprising the steps of:

(i) injecting a quantity of the second plastics through the gate, via the created passage/s into said second region of the cooling cavity, while the injected first quantity of plastics, which has cooled and hardened, stabilizes the core by impeding any movement of the core caused by injecting the second plastics,

(j) filling up the second region of the cooling cavity and fusing the second plastics with the previously injected first plastics.

Brief Description of the Drawings

The invention will now be described by way of example with reference to the accompanying drawings in which:

Figure 1 is a schematic cross-sectioned view of a first injection mold for the injection molding of a plastics product in accordance with the invention;

Figure 2 is a schematic perspective view of the mold of Figure 1 after the initial injection of first plastics material in accordance with the invention;

Figure 3 is a schematic perspective view of a second injection mold at the same stage in the process as illustrated in Figure 2.

Figure 4 is a schematic perspective view of a third injection mold at the same stage in the process as illustrated in Figure 2,

Figure 5 is a schematic cross-sectional view of a fourth injection mold for the injection moulding of a plastics product in accordance with the invention, and

Figures 6 and 7 are schematic fragmentary side views of the mold illustrated in Figure 5 at subsequent stages of the process.

Description of the Preferred Embodiments

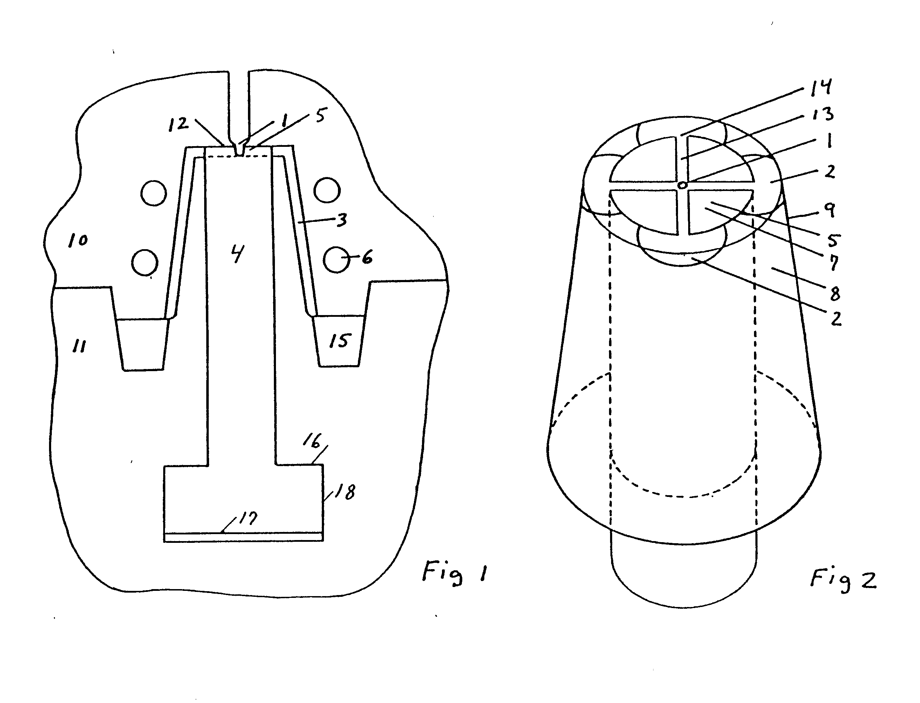

In the embodiment of Figures 1 and 2 a mold comprises a core part 11 with a core 9 and a cavity part 10 defining a cooling cavity 3 therebetween in which a plastics injection moulded product is formed. The plastics material for forming the product is injected into the cooling cavity by means of an injection gate 1.

Positioned within the core part 11 of the mold is a retractable element 4 which, in its extended position shown in full lines in Figure 1, projects into the cooling cavity 3 and abuts the cavity part 10. The surface of the retractable element 4 which abuts the cavity part 10 is generally circular and has four radially extending feed channels 13 evenly spaced around the periphery of the apex 12 of the core 9, radiating from a central position confronting the injection gate 1 and opening into the cooling cavity at 14. The retractable element 4 suitably is movable by conventional means such as hydraulic fluid acting upon the appropriate piston surfaces 16, 17 within a double-acting hydraulic cylinder 18 to cause, respectively, retraction or extension of the element 4. In its retracted position the retractable element 4 adopts the position indicated by dotted lines in Figure 1 flush with the rest of the upper surface of the core part 11.

In use the retractable element 4 is fully extended and a first, small, quantity of hot molten plastics material is injected through the injection gate 1 into the cooling cavity 3. As the retractable element 4 abuts the cavity part 10, the first plastics material flows along feed channels 13 and issues into the cooling cavity 3 at the openings 14 forming respective first stabilising regions 2. Because only a relatively small quantity of the first plastics material is injected at a low pressure the whole cooling cavity 3 does not fill up but the regions 2 as they harden are sufficient to locate the core part 11 substantially centrally. The element 4 is then retracted by the hydraulic means to provide a retraction region 5 which connects the gate 1 to a second region 8 before the first plastics material fully solidifies, and a relatively large amount of second plastics material is injected through the injection gate 1, at high pressure, to fill the unfilled portion of the cooling cavity 3. The second plastics material passing to the remainder of the cooling cavity 3 through retraction passages 7 defined between the positions of the feed channels 13 on the retraction of the retractable element 4. The first and second plastics materials then fuse together on cooling by cooling means 6 so as to form a plastics molded product which may be ejected from the core part 11 by stripper means 15.

During the molding process the core part 11 is stabilised against lateral deflection solely by the injection of the first plastics material and not by the abutment with the cavity part 10.

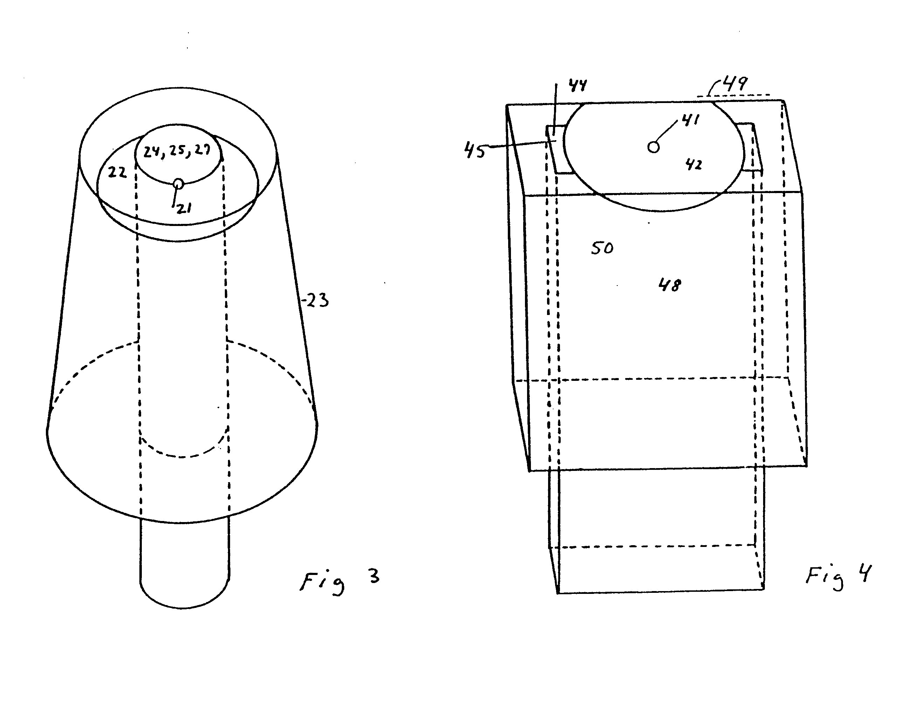

In Figure 3 a similar arrangement is disclosed except that the injection gate 21 is aligned with the edge of the retractable element 24 so that, on injection of first plastics material, a single stabilising region 22 is formed. Then, upon retraction of the element 24, the whole of the retraction area 25 defines a retraction passage 27 through which second plastics material may flow to fill the remainder of the cooling cavity 23.

In the arrangement of Figure 4 the injection gate 41 is aligned centrally of the retractable element 44. However, instead of its surface abutting the cavity part 49 in its extended position as in the first two embodiments, the surface lies flush with the cooling cavity 48 as defined by the core part. Thus, on injection of first plastics material, a single stabilising region 42 is formed about the injection gate 41 and overlapping the sides of the core part 50. The retractable element 44 is then retracted to provide a temporary retraction area 45 which defines a flow path, beneath the region 42, for the second plastics material to pass through to fill the rest of the cooling cavity.

However, during or immediately after the injection of the second plastics material the retractable element 44 is extended to shape the product to the desired controlled dimensions before the first and second plastics solidify and fuse together.

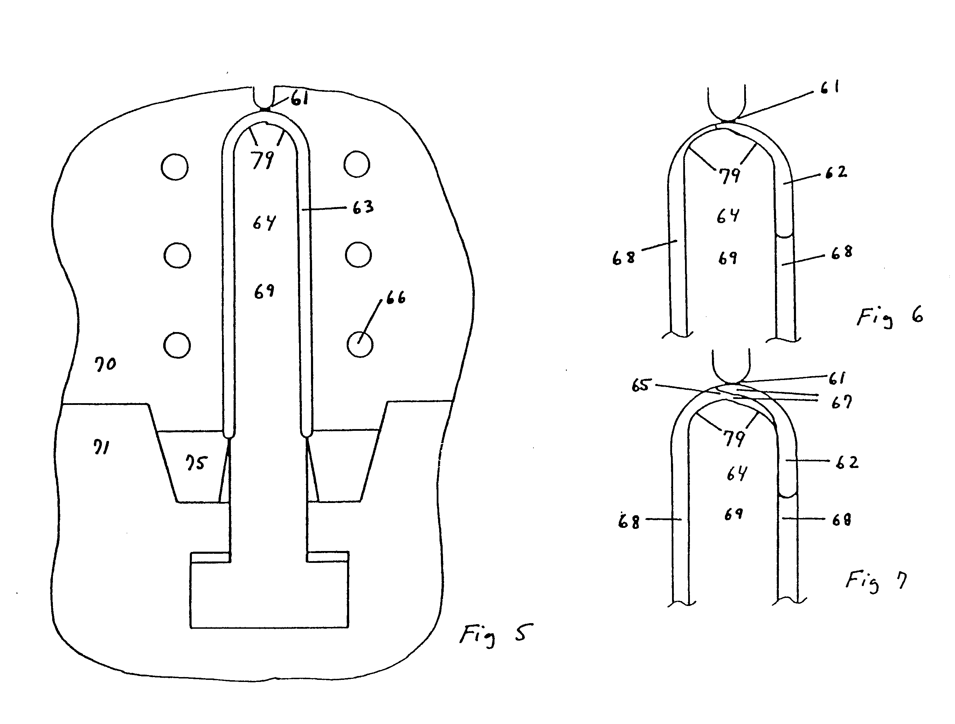

In the final embodiment of Figures 5, 6, and 7 a mold for forming a plastics test tube is illustrated. The mold comprises a cavity part 70, and a core part 71 having a movable core 69, the upper surface of which forms the retractable element 64. The core 69 suitably is movable by hydraulic means in the same manner as that described with reference to Figure 1 and defines with the cavity part 70, a cooling cavity 63 cooled by conventional cooling means 66. In this embodiment the retractable element 64, formed in this case by the whole core 69, is first positioned fully extended, but the apex 79 of the core 69 is not abutting the cavity part 70 as is shown in Figure 6 whereupon first plastics material is injected through the injection gate 61 to form a first stabilising region 62. The element 64 is then retracted to leave a retraction region 65 below the gate 61 and in communication with the rest of the cooling cavity 68. Second plastics material is now injected through the molten first plastics which has not completely solidified by cooling, and passes, via the retraction to fill the remainder of the cooling cavity 68. Once the first and second plastics materials have solidified and fused together to form a test tube of controlled dimensions, the test tube may be ejected by ejector means 75.

It will thus be understood that in the first, second and fourth embodiments the retractable element forms part of the cooling cavity in which second plastics materials is allowed to solidify to complete the product being formed. On the other hand, in the third embodiment, the retractable element does not form part of the cooling cavity per se and must be extended before the second plastics material solidifies.

In all the embodiments of the invention the core part is stabilised by the stabilising region or regions formed by the first plastics material thereby impeding any lateral deflection of the core during subsequent injection of second plastics material at higher pressure. Thus, the stabilising is not dependent upon contact of the retractable element with the surface of the cavity part.

Although the invention has been particularly described by way of example with reference to four different embodiments it is understood that other variations may be made within the scope of the appended claims. For example there may be more than one gate, more than one core, more than one retractable element which may be retracted and extended at various periods in the molding cycle, or the mold may be multi-cavity mold having more than one cooling cavity.

**Claims**

1. A method for controlling the dimensions of a hollow plastics product injection molded within the cooling cavity (3) of a mold having a core part (11) and a cavity part (10) defining the cooling cavity (3) therebetween, the cooling cavity (3) comprising a retractable element (4), and injection gate means (1) opening into the cooling cavity (3), comprising stabilising the core part (11) and the steps of injecting first plastics material through said injection gate means (1) into the cooling cavity (3) while the retractable element (4) is in its unretracted position and of injecting second plastics material while the retractable element (4) is in its retracted position; characterised by the steps of:

(a) injecting the first plastics material so that a portion (8) of the cooling cavity apart from the retraction region of the retractable element (4) is not filled;

(b) using the first plastics material to stabilise the core part (11) by impeding movement of the core part (11);

(c) retracting the retractable element (4) of the cooling cavity to provide a flow path for the second plastics material between the injection gate means (1) and said unfilled portion (8) of the cooling cavity (3); and

(d) injecting second plastics material through the injection gate means (1) to said unfilled portion of the cooling cavity (3) by passage through said flow path; and

(e) fusing the second plastics material with the harder previously injected first plastics material to form a solidified hollow molded product.

2. A method according to claim 1 wherein the flow path forms part of the cooling cavity and remains filled with second plastics material.

3. A method according to claim 1 wherein the flow path does not form part of the cooling cavity and wherein the retractable element (4) is extended to define the cooling cavity during or after injection of the second plastics material.

4. A method according to any one of the preceding claims wherein the core (9) is not at any time during the molding cycle supported from transverse deflection by the cavity part (10) of the cooling cavity (3).

5. A method according to claim 4 wherein the core (9) is not at any time during the molding cycle in contact with the cavity part (10) of the cooling cavity (3).

6. A method according to claim 1 wherein the first plastics material enters the cooling cavity at a lower pressure than the second plastics material.

7. A method according to any of the preceding claims wherein a relatively smaller amount of first plastics material is injected into the cooling cavity as compared with the quantity of second plastics material.

8. A method according to any one of the preceding claims comprising injecting the first and second plastics material through one or more injection gates.

9. A method of cyclic injection molding of hollow plastics products employing a mold comprising a core part (11) and a cavity part (10), wherein the dimensions of the molded product are controlled, each production cycle comprises the steps of:

(a) injecting a hot molten first quantity of plastics through a gate (1) into a first region (2) of a cooling cavity (3),

(b) retracting a retractable element (4) of the cooling cavity (3), whereby a retraction region (5) is created in the cooling cavity (3) thereby providing the cooling cavity in a retracted mode,

(c) injecting subsequent to injecting the first quantity of plastics, a hot molten second quantity of plastics through the gate (1), filling up the retraction region (5) of the cooling cavity,

(d) cooling by cooling means (6) the injected first and second quantity of plastics to thereby solidify the first and second quantity of plastics,

(e) ejecting by ejector means (15) the solidified hollow molded product, and

(f) protracting the retractable element (4) of the cooling cavity (3) thereby providing the cooling cavity in an unretracted mode,

characterised by:

Step (a) comprising the step of:

(g) injecting the quantity of the first plastics into the first region (2) of the cooling cavity (3) which is in its unretracted mode, in such manner that the cooling cavity (3) comprises a second region (8) apart from the retraction region (5) which is not filled up, Step (b) comprising the step of:

(h) creating one or more retraction passages (7) which connect the gate (1) to said second region (8) of the cooling cavity (3), Step (c) comprising the steps of:

(i) injecting a quantity of the second plastics through the gate (1), via the created passage/s (7) into said second region (8) of the cooling cavity (3), while the injected first quantity of plastics, at least a first part of which has cooled and hardened, stabilizes the core by impeding any movement of the core (9) caused by injecting the second plastics,

(j) filling up said second region (8) of the cooling cavity (3) and fusing the second plastics with the previously injected first plastics.

10. A method according to Claim 9, characterised in that step (f) takes place during or after injecting the second quantity of plastics and before ejecting the moulded product.

11. A method according to Claim 9, characterised in that step (i) comprises injecting the second plastic through a molten second part of the first plastic which has not completely solidified by cooling.

**Patentansprüche**

1. Verfahren zum Kontrollieren der Abmessungen eines hohlen, durch Spritzgießen im Kühlhohlraum (3) einer Form hergestellten Kunststoffproduktes, bei der ein Kernteil (11) und ein Hohlraumteil (10) zwischen sich den Kühlhohlraum (3) bilden, wobei der Kühlhohlraum (3) ein zurückziehbares Element (4) enthält und in den Kühlhohlraum (3) mündende Einspritztormittel (1) vorgesehen sind, umfassend das Stabilisieren des Kernteils (11) und die Schritte des Einspritzens von erstem Kunststoffmaterial durch die genannten Einspritztormittel (1) in den Kühlhohlraum (3), während sich das zurückziehbare Element (4) in seiner nicht zurückgezogenen Lage befindet, und des Einspritzens von zweitem Kunststoffmaterial, während das zurückziehbare Element (4) sich in seiner zurückgezogenen Lage befindet, gekennzeichnet durch die Schritte:

(a) Einspritzen des ersten Kunststoffmaterials, so daß ein Teil (8) des Kühlhohlraums, der abseits von dem Zurückziehungsbereich des zurückziehbaren Elements (4) liegt, nicht gefüllt wird;

(b) Verwendung des ersten Kunststoffmaterials zur Stabilisierung des Kernteils (11) durch Behindern einer Bwegung des Kernteils (11);

(c) Zurückziehen des zurückziehbaren Elements (4) des Kühlhohlraums, um einen Fließweg für das zweite Kunststoffmaterial zwischen den Einspritztormitteln (1) und dem genannten nicht gefüllten Teil (8) des Kühlhohlraums (3) vorzusehen, und

(d) Einspritzen des zweiten Kunststoffmaterials durch die Einspritztormittel (1) zu dem genannten nichtgefüllten Teil des Kühlhohlraums (3) durch Durchfluß durch den genannten Fließweg; und

(e) Verschmelzen des zweiten Kunststoffmaterials mit dem härteren, zuvor eingespritzten ersten Kunststoffmaterial, um ein verfestigtes hohles Formprodukt zu bilden.

2. Verfahren nach Anspruch 1, bei dem der Fließweg einen Teil des Kühlhohlraums bildet und mit dem zweiten Kunststoffmaterial gefüllt bleibt.

3. Verfahren nach Anspruch 1, bei dem der Fließweg nicht Teil des Kühlhohlraums bildet, und bei dem das zurückziehbare Element (4) verlängert ist, um den Kühlhohlraum während oder nach dem Einspritzen des zweiten Kunststoffmaterials zu definieren.

4. Verfahren nach einem der vorhergehenden Ansprüche, bei dem der Kern (9) zu keiner Zeit während des Spritzzyklus durch den Hohlraumteil (10) des Kühlhohlraums (3) gegen seitliche Auslenkung unterstützt wird.

5. Verfahren nach Anspruch 4, bei dem der Kern (9) zu keiner Zeit während des Spritzzyklus in Berührung mit dem Hohlraumteil (10) des Kühlhohlraums (3) ist.

6. Verfahren nach Anspruch 1, bei dem das erste Kunststoffmaterial in den Kühlhohlraum mit einem niedrigeren Druck eintritt als das zweite Kunststoffmaterial.

7. Verfahren nach einem der vorhergehenden Ansprüche, bei dem im Vergleich zu der Menge des zweiten Kunststoffmaterials eine verhältnismäßig kleinere Menge des ersten Kunststoffmaterials in den Kühlhohlraum eingespritzt wird.

8. Verfahren nach einem der vorhergehenden Ansprüche, bei dem das erste und zweite Kunststoffmaterial durch ein oder mehrere Einspritztore eingespritzt wird.

9. Verfahren zum zyklischen Spritzgießen von hohlen Kunststoffprodukten unter Verwendung einer Form, die einen Kernteil (11) und einen Hohlraumteil (10) enthält, wobei die Abmessungen des geformten Produkts kontrolliert werden, und wobei jeder Produktionszyklus die Schritte umfaßt:

(a) Einspritzen einer heißen geschmolzenen ersten Menge von Kunststoff durch ein Tor (1) in einen ersten Bereich (2) eines Kühlhohlraums (3),

(b) Zurückziehen eines zurückziehbaren Elements (4) des Kühlhohlraums (3), wodurch ein Zurückziehungsbereich (5) in dem Kühlhohlraum (3) erzeugt und dadurch der Kühlhohlraum in einer zurückgezogenen Art vorgesehen wird,

(c) nach Einspritzen der ersten Menge von Kunststoff Einspritzen einer geschmolzenen Menge von zweiten Kunststoff durch das Tor (1), um den Zurückziehungsbereich (5) des Kühlhohlraums aufzufüllen,

(d) Kühlen der ersten und zweiten eingespritzen Kunststoffmenge durch Kühlmittel (6), um dadurch die erste und zweite Menge des Kunststoffs zu verfestigen,

(e) Ausstoßen des vorgefertigten hohlen geformten Produkts durch Ejektormittel (15) und

(f) Vorfahren des zurückziehbaren Elements (4) des Kühlhohlraums (3) um dadurch den Kühlhohlraum in einer nicht zurückgezogenen Art vorzusehen,

gekennzeichnet dadurch, daß der Schritt (a) den Schritt umfaßt:

(g) Einspritzen der Menge des erste Kunststoffs in den ersten Bereich (2) des Kühlhohlraums (3), der sich in seiner nicht zurückgezogenen Art befindet, in solcher Weise, daß der Kühlhohlraum (3) einen zweiten Bereich (8) von dem Zurückziehungsbereich (5) entfernt umfaßt, der nicht gefüllt wird, daß der Schritt (b) den Schritt umfaßt:

(h) Erzeugung eines oder mehrerer Zurückziehungsdurchlässe (7), die das Tor (1) mit dem genannten zweiten Bereich (8) des Kühlhohlraums (3) verbinden,

daß der Schritt (c) die folgenden Schritte umfaßt:

(i) Einspritzen einer Menge des zweiten Kunststoffs durch das Tor (1) über den bzw. die erzeugten Durchlässe (7) in den genannten zweiten Bereich (8) des Kühlhohlraums (3), während die eingespritzte erste Menge an Kunststoff, von der wenigstens ein erster Teil abgekühlt und erhitzt ist, den Kern durch Behinderung jeglicher Bewegung des Kerns (9) als Folge der Einspritzung des Kunststoffs stabilisiert,

(j) Auffüllen des genannten zweiten Bereichs (8) des Kühlhohlraums (3) und Verschmelzen des zweiten Kunststoffs mit dem zuvor eingespritzten ersten Kunststoff.

10. Verfahren nach Anspruch 9, dadurch gekennzeichnet, daß der Schritt (f) während oder nach dem Einspritzten der zweiten Menge an Kunststoff und vor dem Ausstoßen des geformten Produkts stattfindet.

11. Verfahren nach Anspruch 9, dadurch gekennzeichnet, daß der Schritt (i) das Einspritzen des zweiten Kunststoffs durch einen geschmolzenen zweiten Teil des ersten Kunststoffs umfaßt, der noch nicht vollständig durch Kühlung verfestigt ist.

**Revendications**

1. Procédé pour contrôler les dimensions d'un produit creux en matière plastique moulé par injection à l'intérieur de la cavité de refroidissement (3) d'un moule présentant une partie de noyau (11) et une partie de cavité (10) définissant entre elles la cavité de refroidissement (3), la cavité de refroidissement (3) comprenant un élément rétractable (4), et une porte d'injection (1) s'ouvrant dans la cavité de refroidissement (3), comprenant la stabilisation de la partie de noyau (11) et les étapes d'injection d'un premier matériau plastique par ladite porte d'injection (1) dans la cavité de refroidissement (3) tandis que l'élément rétractable (4) est à sa position non rentrée, et d'injection d'un deuxième matériau plastique tandis que l'élément rétractable (4) est à sa position rentrée;

caractérisé par les étapes de:

(a) injection du premier matériau plastique de telle sorte qu'une partie (8) de la cavité de refroidissement éloignée de la région de rétraction de l'élément rétractable (4) n'est pas remplie;

(b) utilisation du premier matériau plastique pour stabiliser la partie de noyau (11) en empêchant le déplacement de la partie de noyau (11);

(c) rétraction de l'élément rétractable (4) de la cavité de refroidissement afin de fournir un passage d'écoulement du deuxième matériau plastique entre la porte d'injection (1) et ladite partie non remplie (8) de la cavité de refroidissement (3); et

(d) injection du deuxième matériau plastique par la porte d'injection (1) vers ladite partie non remplie de la cavité de refroidissement (3), en passant par ledit passage d'écoulement; et

(e) fusion du deuxième matériau plastique avec le premier matériau plastique plus dur précédemment injecté, afin de former un produit moulé creux solidifié.

2. Procédé selon la revendication 1, dans lequel le passage d'écoulement fait partie de la cavité de refroidissement et reste rempli du deuxième matériau plastique.

3. Procédé selon la revendication 1, dans lequel le passage d'écoulement ne fait pas partie de la cavité de refroidissement, et dans lequel l'élément rétractable (4) est déployé pour définir la cavité de refroidissement au cours de l'injection du deuxième matériau plastique ou après cette dernière.

4. Procédé selon une quelconque des revendications précédentes, dans lequel le noyau (9) n'est à aucun moment du cycle de moulage supporté vis-à-vis d'une déflexion latérale par la partie de cavité (10) de la cavité de refroidissement (3).

5. Procédé selon la revendication 4, dans lequel le noyau (9) n'est à aucun moment du cycle de moulage en contact avec la partie de cavité (10) de la cavité de refroidissement (3).

6. Procédé selon la revendication 1, dans lequel le premier matériau plastique pénètre dans la cavité de refroidissement à une pression plus basse que le deuxième matériau plastique.

7. Procédé selon une quelconque des revendications précédentes, dans lequel une relativement petite quantité de premier matériau plastique est injectée dans la cavité de refroidissement, comparé à la quantité de deuxième matériau plastique.

8. Procédé selon une quelconque des revendications précédentes, comprenant l'injection des premier et deuxième matériaux plastiques par une ou plusieurs portes d'injection.

9. Procédé de moulage par injection cyclique de produits creux en matière plastique, utilisant un moule comprenant une partie de noyau (11) et une partie de cavité (10), dans lequel les dimensions du produit moulé sont contrôlées, chaque cycle de production comprenant les étapes de:

(a) injection d'un première quantité de matière plastique chaude en fusion par une porte (1) dans une première région (2) d'une cavité de refroidissement (3),

(b) rétraction d'un élément rétractable (4) de la cavité de refroidissement (3), une région de rétraction (5) étant ainsi créée dans la cavité de refroidissement (3), ce qui met la cavité de refroidissement à un mode de fonctionnement rétracté,

(c) injection, suite à l'injection de la première quantité de matière plastique, d'une deuxième quantité de matière plastique chaude en fusion par la porte (1), remplissant ainsi la région de rétraction (5) de la cavité de refroidissement,

(d) refroidissement, par des moyens de refroidissement (6), des première et deuxième quantités de matières plastiques injectées, solidifiant ainsi les première et deuxième quantités de matières plastiques,

(e) éjection, par des moyens d'éjection (15), du produit moulé creux solidifié, et

(f) déploiement de l'élément rétractable (4) de la cavité de refroidissement (3), ce qui met la cavité de refroidissement à un mode de fonctionnement non rétracté,

caractérisé en ce que:

l'étape (a) comprend l'étape

(g) consistant à injecter la quantité de première matière plastique dans la première région (2) de la cavité de refroidissement (3) qui est à son mode non rétracté, d'un manière telle que la cavité de refroidissement (3) comprend une deuxième région (8), éloignée de la région de rétraction (5), qui n'est pas remplie,

l'étape (b) comprend l'étape

(h) consistant à créer un ou plusieurs passages de rétraction (7) qui relient la porte (1) à ladite deuxième région (8) de la cavité de refroidissement (3),

et l'étape (c) comprend les étapes

(i) consistant à injecter une quantité de la deuxième matière plastique par la porte (1), par l'intermédiaire du ou des passages (7) créé(s), dans ladite deuxième région (8) de la cavité de refroidissement (3), tandis que la première quantité de matière plastique injectée, dont au moins une première partie s'est refroidie et a durci, stabilise le noyau en empêchant tout déplacement du noyau (9) qui serait causé par l'injection de la deuxième matière plastique, et

(j) consistant à remplir ladite deuxième partie (8) de la cavité de refroidissement (3) et à fusionner la deuxième matière plastique avec la première matière plastique précédemment injectée.

10. Procédé selon la revendication 9, caractérisé en ce que l'étape (f) a lieu au cours de l'injection de la deuxième quantité de matière plastique ou après cette injection, et avant d'éjecter le produit moulé.

11. Procédé selon la revendication 9, caractérisé en ce que l'étape (i) comprend l'injection de la deuxième matière plastique à travers une deuxième partie en fusion de la première matière plastique, laquelle n'a pas été solidifiée dans sa totalité par son refroidissement.

Fig 1

Fig 2

0 100 603

24,25,27

22

21

23

Fig 3

44

49

45

41

42

50

48

Fig 4

Fig 6

Fig 7

Fig 5